# EUROPÄISCHE PATENTSCHRIFT

(11) **EP 2 197 092 B1**
(45) Veröffentlichungstag und Bekanntmachung des Hinweises auf die Patenterteilung: **01.05.2013**
(21) Anmeldenummer: 08171368.7
(22) Anmeldetag: 11.12.2008
(51) Int. Cl.: H02K 24/00, H02K 29/08, H02K 11/00

(54) **Verfahren zum Montieren eines Resolvers und elektrische Maschine**
Method for fitting a resolver and electrical machine
Procédé destiné au montage d'un résolveur et machine électrique

(43) Veröffentlichungstag der Anmeldung: 16.06.2010
(73) Patentinhaber: Siemens Aktiengesellschaft, 80333 München (DE)
(72) Erfinder: Voll, Miriam, 97657 Langenleiten (DE)

(56) Entgegenhaltungen:
- EP-A- 1 662 637
- DE-A1-102007 013 049
- US-A- 4 888 509
- US-A- 5 061 868

## Beschreibung

Die vorliegende Erfindung betrifft ein Verfahren zum Montieren eines Resolvers, der einen Resolverstator und einen Resolverrotor aufweist, auf einer Welle insbesondere einer elektrischen Maschine. Darüber hinaus betrifft die vorliegende Erfindung eine derartige elektrische Maschine.

Eine elektrische Maschine kann mit einem Resolver ausgestattet werden, um die Drehzahl oder die Drehposition der Welle der elektrischen Maschine zu bestimmen. Hierzu wird der Resolverstator üblicherweise an einem Lagerschild der elektrischen Maschine und der Resolverrotor an der Welle befestigt. Wichtig dabei ist, dass der Resolverrotor und damit die Welle gegenüber dem Resolverstator eine definierte Drehposition besitzt. Um dies zu gewährleisten, wird üblicherweise bei der Endprüfung einer elektrischen Maschine der Resolverstator gegenüber dem Resolverrotor dadurch justiert, dass der Resolverstator entsprechend verdreht wird. Diese Justage stellt jedoch im Rahmen der Endprüfung eine verhältnismäßig aufwendige Prozedur dar.

Aus der US 4,888,509 A ist ein Servomotor bekannt, bei dem beim Austausch des Motors wenige Einstellungen vorzunehmen sind.

Aus der DE 10 2007 013 049 A1 ist ein Verfahren zum Montieren eines Winkelmessgeräts an einem elektrischen Motor bekannt, bei dem eine rotationssymmetrische Kupplung verwendet wird, bei der die Kupplungshälften nur in einer endlichen Zahl von relativen Winkelstellung zueinander miteinander verbindbar sind, wobei eine Justage stattfindet bevor die Kupplungshälften an den jeweiligen Läufern befestigt werden.

Die Aufgabe der vorliegenden Erfindung besteht somit darin, das Justieren eines Resolvers an einer elektrischen Maschine zu vereinfachen.

Erfindungsgemäß wird diese Aufgabe gelöst durch ein Verfahren zum Montieren eines Resolvers, der einen Resolverstator und einen Resolverrotor aufweist, an einer Welle, durch Bereitstellen des Resolverstators mit mindestens einer axial ausgebildeten Statorausnehmung und Bereitstellen des Resolverrotors mit mindestens einer axial ausgebildeten Rotorausnehmung sowie Ausrichten der Statorausnehmung und der Rotorausnehmung in Rotationsrichtung zueinander, indem ein Montagewerkzeug zum Montieren des Resolvers mit einem jeweiligen Werkzeugabschnitt gleichzeitig in die Statorausnehmung und die Rotorausnehmung axial gesteckt wird.

Darüber hinaus wird erfindungsgemäß bereitgestellt eine elektrische Maschine mit einer Welle und einem Resolver, der einen Resolverstator und einen Resolverrotor aufweist, wobei der Resolverstator mindestens eine Statorausnehmung und der Resolverrotor mindestens eine Rotorausnehmung aufweist, und die Statorausnehmung und die Rotorausnehmung axial ausgebildet sind, so dass ein Montagewerkzeug zum Montieren des Resolvers an die Welle mit einem jeweiligen Werkzeugabschnitt gleichzeitig in die Statorausnehmung und die Rotorausnehmung axial steckbar ist, um die Drehposition beider Resolverkomponenten zueinander genau festzulegen.

In vorteilhafter Weise ist es durch die Ausnehmungen im Resolverstator und im Resolverrotor und das hierzu passende Montagewerkzeug möglich, die Drehposition beider Resolverkomponenten zueinander genau festzulegen. Damit kann eine Justage nach der Montage entfallen.

Gemäß einer Ausführungsform kann das Montagewerkzeug einen Hohlzylinder aufweisen, an dessen einer Stirnseite zwei unterschiedlich geformte Stifte axial abstehen, welche als die Werkzeugabschnitte in die Statorausnehmung und die Rotorausnehmung zum Ausrichten eingesteckt werden. Wenn die Ausnehmungen entsprechend negativ zu den Stiften geformt sind, kann dadurch eine Formcodierung erzielt werden, mit der die Drehpositionen von Resolverstator und Resolverrotor eindeutig zueinander festgelegt werden können.

Durch den Hohlzylinder des Montagewerkzeugs hindurch kann eine Schraube oder Mutter zur Befestigung des Resolverrotors in/auf die Welle geschraubt werden. Dadurch muss das Montagewerkzeug erst nach der endgültigen Befestigung des Resolverrotors auf der Welle und gegebenenfalls des Resolverstators an einem Lagerschild der elektrischen Maschine vom Resolver abgezogen werden.

In einer weiteren Ausführungsform kann das Montagewerkzeug ein Presswerkzeug sein, das eine Stange mit einer axial verlaufenden Führung und eine darauf axial geführte Hülse aufweist, wobei der Resolverrotor beim Aufpressen auf die Welle mit seiner Rotorausnehmung an der Führung axial geführt wird. Damit kann einem Presswerkzeug eine zusätzliche Funktion, nämlich die des Montagewerkzeugs zum Ausrichten der Resolverkomponenten zugeordnet werden.

Die Stange des Montagewerkzeugs kann so ausgebildet sein, dass es sich formschlüssig bzw. verdrehfest axial auf die Welle stecken lässt. Dadurch ist eine Montage mit eindeutiger Zuordnung der Resolverrotor-Drehposition zu der Wellen-Drehposition möglich.

Darüber hinaus kann das Montagewerkzeug mindestens eine zu der Stange parallele Ausrichtstange aufweisen, die beim Ausrichten in die Statorausnehmung gesteckt wird. Über die Stangen stellt das Montagewerkzeug eine eindeutige Beziehung zwischen Resolverstator und Resolverrotor hinsichtlich Drehposition her.

Gemäß einer anderen Ausführungsform ist vorgesehen, dass das Montagewerkzeug einen radial ausgerichteten Werkzeugabschnitt aufweist, die Rotorausnehmung und die Statorausnehmung jeweils stirnseitig am Resolverrotor und am Resolverstator ausgebildet sind, und der radial gerichtete Werkzeugabschnitt zum Ausrichten axial in die beiden Ausnehmungen gesteckt wird. Damit ist ein Ausrichten von Resolverrotor und Resolverstator auch möglich, wenn deren Stirnseiten in einer Ebene liegen

Wiederum kann das Montagewerkzeug ein Formschlusselement aufweisen, mit dem es verdrehsicher auf die Welle aufgesteckt wird. Insbesondere kann das Formschlusselement so ausgebildet sein, dass es nur in einer vorgegebenen Drehstellung auf die Welle aufsteckbar ist. Dadurch lässt sich wie in dem obigen Beispiel eine eindeutige Drehposition zwischen den Elementen Welle, Resolverstator und Resolverrotor festlegen.

Die vorliegende Erfindung wird nun anhand der beigefügten Zeichnungen näher erläutert, in denen zeigen:
- FIG 1: einen Querschnitt durch einen montierten Resolver gemäß dem Stand der Technik;
- FIG 2: einen Querschnitt durch einen Resolver gemäß einer ersten Ausführungsform;
- FIG 3: eine perspektivische Ansicht eines Montagewerkzeugs für den Resolver von FIG 2;
- FIG 4: einen Querschnitt durch den Resolver von FIG 2 und das Montagewerkzeug von FIG 3 im montieren Zustand;
- FIG 5: einen Querschnitt durch einen weiteren Resolver gemäß dem Stand der Technik;
- FIG 6: einen Querschnitt durch einen Resolver gemäß einer zweiten Ausführungsform;
- FIG 7: ein Montagewerkzeug für den Resolver von FIG 6;
- FIG 8: eine Stirnseitenansicht einer elektrischen Maschine mit montiertem Resolverstator;
- FIG 9: einen Querschnitt durch die elektrische Maschine von FIG 8 mit angesetztem Resolverrotor;
- FIG 10: einen Ausschnitt von FIG 9 beim Aufpressen des Resolverrotors;
- FIG 11: einen Querschnitt durch die elektrische Maschine mit vollständig aufgepresstem Resolverrotor;
- FIG 12: einen Resolver gemäß einer dritten Ausführungsform;
- FIG 13: ein Montagewerkzeug für den Resolver von FIG 12;
- FIG 14: eine Stirnseitenansicht einer elektrischen Maschine mit dem montierten Resolverstator von FIG 12;
- FIG 15: einen Querschnitt durch einen Teil der elektrischen Maschine von FIG 14 mit nahezu vollständig aufgestecktem Resolverrotor und Montagewerkzeug und
- FIG 16: eine perspektivische Stirnseitenansicht der elektrischen Maschine von FIG 15.

Die nachfolgend näher geschilderten Ausführungsbeispiele stellen bevorzugte Ausführungsformen der vorliegenden Erfindung dar.

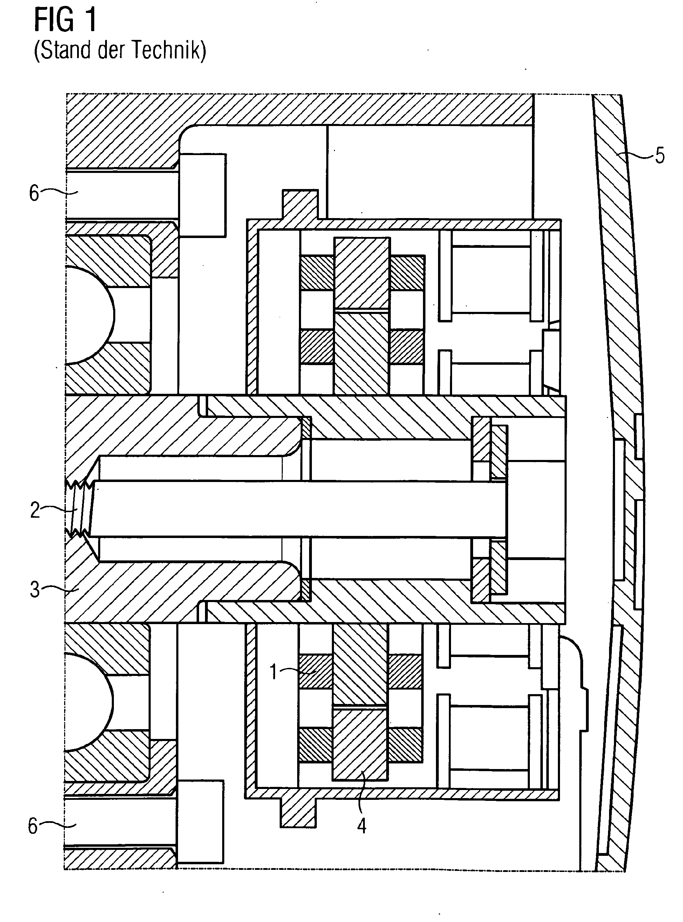

Zum besseren Verständnis der ersten Ausführungsform wird zunächst anhand des Querschnitts von FIG 1 ein Resolver gemäß dem Stand der Technik näher erläutert. Dementsprechend wird ein Resolverrotor 1 mit einer Zentralschraube 2 am Ende einer Welle 3 angeschraubt. Der Stator 4 des Resolvers ist fest mit dem Gehäuse 5 des Resolvers verbunden und mit Schrauben 6 am Lagerschild einer elektrischen Maschine befestigt. Der Resolverstator 4 ist bei nicht vollständig angezogenen Schrauben 6 an der elektrischen Maschine drehbar. Bei der Endprüfung der elektrischen Maschine wird der Stator 4 in die gewünschte Position gedreht, so dass der Resolverstator 4 mit dem Resolverrotor 1 ausgerichtet ist. Anschließend werden die Schrauben 6 endgültig festgedreht. Dieses Justageverfahren ist jedoch verhältnismäßig aufwendig.

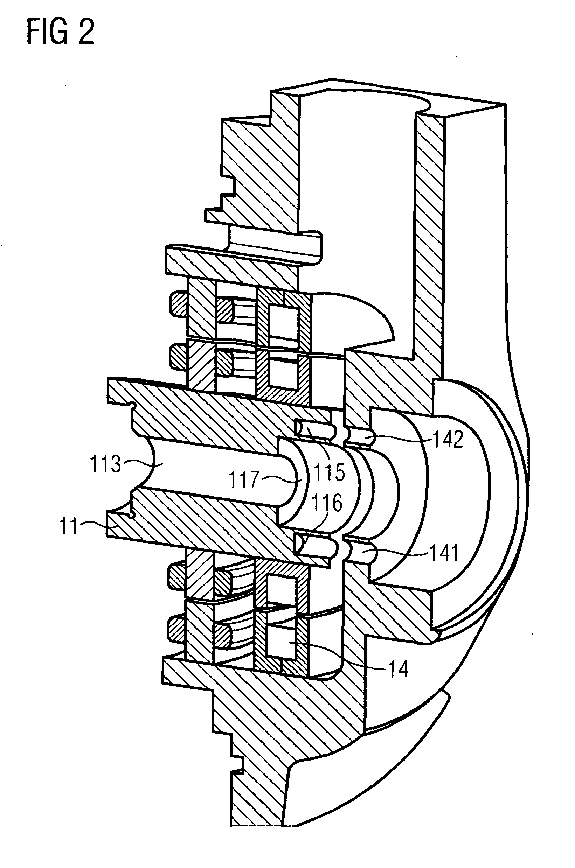

Daher wird gemäß einer ersten Ausführungsform ein Resolver bereitgestellt, der anhand der FIG 2 bis FIG 4 nachfolgend näher erläutert wird. Der Querschnitt von FIG 2 zeigt einen Resolver im Anlieferzustand. Es wird der Resolverrotor 11 mit dem Resolverstator 14 paarig geliefert. Der Resolverrotor 11 besitzt eine axiale Bohrung 113, durch die eine Schraube hindurchgeführt werden kann. Darüber hinaus ist eine Schulter 117 vorgesehen, auf die ein Schraubenkopf aufsitzt. Ferner verfügt der Resolverrotor 11 über zwei Aussparungen 115 und 116 an seiner Stirnseite. Es handelt sich dabei um zwei Sacklochbohrungen, die sich am Umfang 180° gegenüberstehen. Die Aussparung 116 besitzt einen etwas größeren Durchmesser als die Aussparung 115.

Der Resolverstator 14 bzw. dessen Gehäuse besitzt stirnseitig zwei Statorausnehmungen 141 und 142. Diese beiden Statorausnehmungen 141, 142 fluchten axial mit den Rotorausnehmungen 115, 116. Die Statorausnehmung 142 hat den gleichen Durchmesser wie die Rotorausnehmung 115 und die Statorausnehmung 141 hat den gleichen Durchmesser wie die Rotorausnehmung 116.

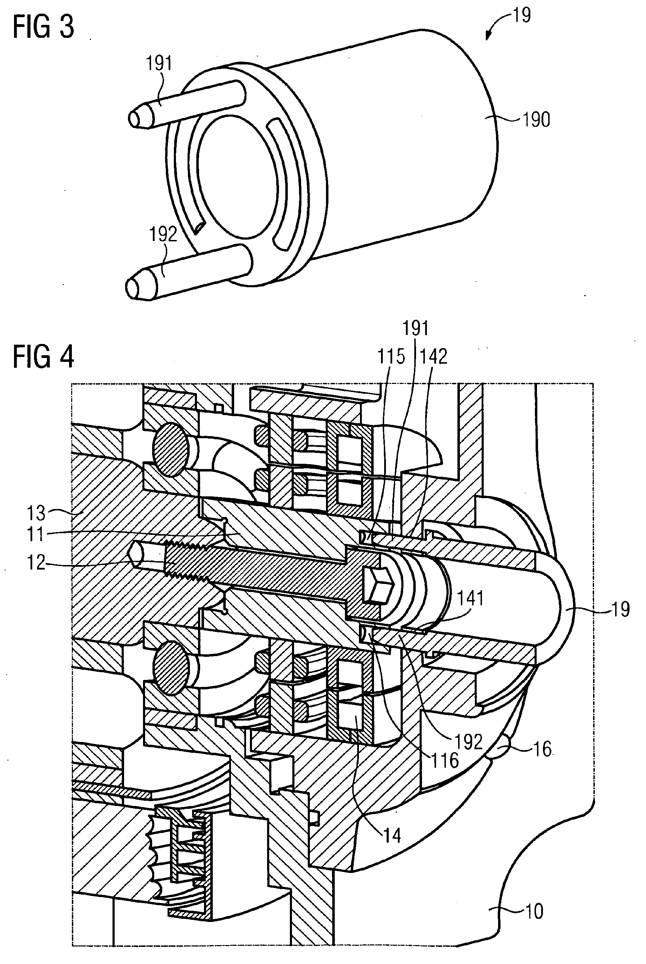

FIG 3 zeigt ein Montagewerkzeug 19. Es besitzt im Wesentlichen einen hülsenförmigen bzw. hohlzylindrischen Körper 190, an dessen einer Stirnseite zwei Stifte 191 und 192 axial abstehen. Der Stift 192 besitzt einen etwas größeren Durchmesser als der Stift 191. Der dickere Stift 192 passt in die Bohrungen bzw. Aussparungen 116 und 141, nicht aber in die Aussparungen 115 und 142. Dadurch kann das Montagewerkzeug 19 nur in einer einzigen Position in den Resolver gesteckt werden. Dies gelingt aber auch nur dann, wenn die Ausnehmungen 115 und 142 sowie die Ausnehmungen 116 und 141 exakt axial fluchten. Dies wiederum bedeutet, dass der Resolverrotor 11 und der Resolverstator 14 zueinander eine eindeutig festgelegte Drehposition besitzen.

FIG 4 zeigt nun den montierten Zustand des Resolvers. Der Resolverstator 14 wird zunächst am Lagerschild 10 der elektrischen Maschine zentriert. Ebenso wird der Resolverrotor 11 auf der Motorwelle 13 zentriert. Die exakte Drehposition des Resolverrotors 11 gegenüber dem Resolverstator 14 wird dadurch erreicht, dass das Montagewerkzeug 19 in den Resolver gesteckt wird. Speziell ist der dünne Stift 191 in die kleinen Ausnehmungen 115, 142 und der dicke Stift 192 in die großen Ausnehmungen 116, 141 gesteckt. Nun wird der Resolverstator 14 mit Schrauben 16 (z.B. vier am Umfang) an das Lagerschild 10 geschraubt. Schließlich wird noch der Resolverrotor 11 mit der Zentralschraube 12 an das Ende der Welle 13 geschraubt.

Mit Hilfe des Montagewerkzeugs 9 kann so die gesamte Resolvereinheit 11, 14 in einer bestimmten Drehposition an die Welle 13 montiert werden und es ist dabei die relative Drehposition von Resolverrotor und Resolverstator zueinander von vorneherein festgelegt. Eine nachträgliche Justage dieser Komponenten kann also entfallen. Nach der Montage wird das Montagewerkzeug 19 vom Resolver axial abgezogen.

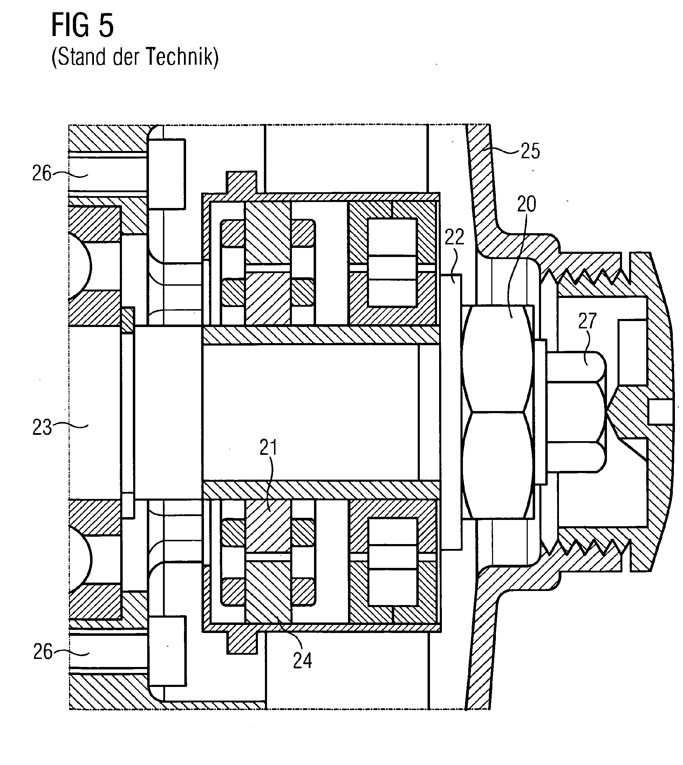

Nachfolgend wird im Zusammenhang mit den FIG 5 bis FIG 11 ein zweites Ausführungsbeispiel der vorliegenden Erfindung erläutert. Der Querschnitt von FIG 5 zeigt zunächst nochmal einen Resolver mit bekannter Bauart. Der Resolver 21 ist hier auf eine Welle 23 gepresst. Eine Mutter 20, die auf das Wellenende aufgeschraubt wird, drückt zusammen mit einer Tellerfeder 22 den Resolverrotor 21 gegen eine Wellenschulter. Der Resolverstator 24 bzw. das Resolvergehäuse 25 ist auch hier mit Hilfe von Schrauben 26 am Lagerschild der elektrischen Maschine befestigt. Am Ende ist in die Welle 23 ein Sechskant 27 eingearbeitet, um die genaue Drehposition der Welle 23 zu erkennen bzw. zu erreichen.

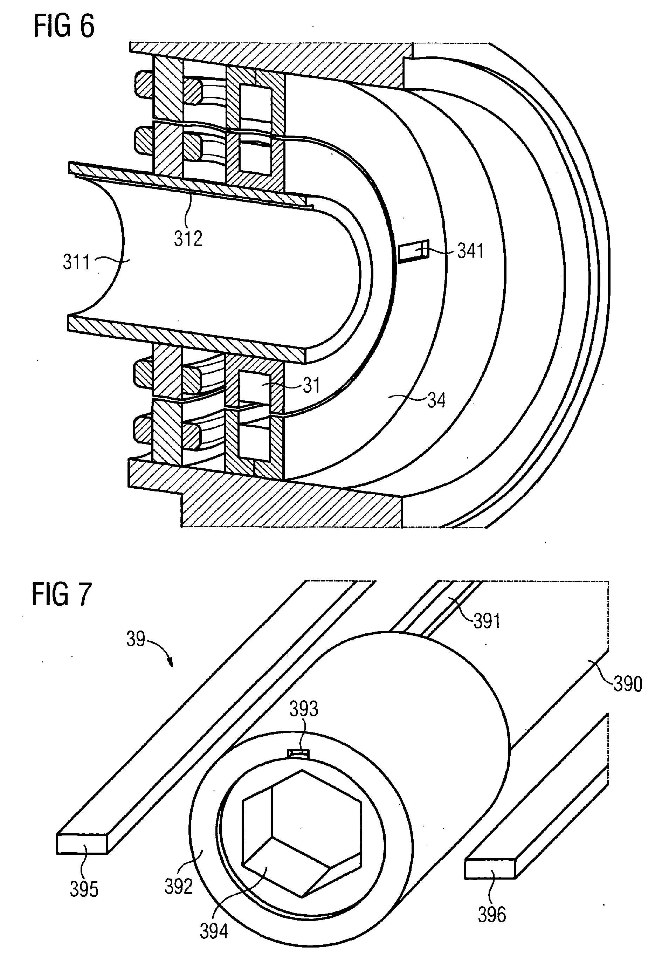

Die Justage von Resolverstator bzw. Resolverrotor an der Welle 23 ist auch hier bei dem aufgepressten Resolverrotor 21 sehr mühsam. Daher wird in einer zweiten Ausführungsform der Resolver von FIG 6 vorgeschlagen. Der dort dargestellte Resolverrotor 31 besitzt eine Innenhülse 311, mit der er auf eine Welle aufgepresst werden kann. An der Innenseite dieser Innenhülse 311 verläuft in axialer Richtung eine Nut 312.

Umgeben ist der Resolverrotor 31 von einem Resolverstator 34. An einer Stirnfläche des Resolverstators 34 ist eine Statorausnehmung 341 zu erkennen. Diese Statorausnehmung 341 ist hier rechteckförmig ausgebildet und besitzt eine gewisse axiale Erstreckung.

In FIG 7 ist ein Teil eines Montagewerkzeugs 39 perspektivisch dargestellt. Es besitzt einen ersten Stab 390, auf dessen Oberfläche sich in axialer Richtung eine erhabene Führung 391 erstreckt. Das Montagewerkzeug 39 stellt ein Presswerkzeug dar und besitzt daher eine Presshülse 392, die axial verschiebbar auf dem ersten Stab 390 gelagert ist. Die erhabene Führung 391 gleitet in eine Nut 393 der Presshülse 392. An der Stirnseite der ersten Stange 390 ist ein Innensechskant 394 ausgebildet. Parallel zu der ersten Stange 390 sind an dem Montagewerkzeug 39 hier zwei weitere Stangen 395 und 396 vorgesehen. Sie besitzen im vorliegenden Beispiel rechteckförmigen Querschnitt und sind an dem in FIG 7 nicht dargestellten Ende mit der ersten Stange 390 verbunden, so dass sie zueinander eine feste Position besitzen.

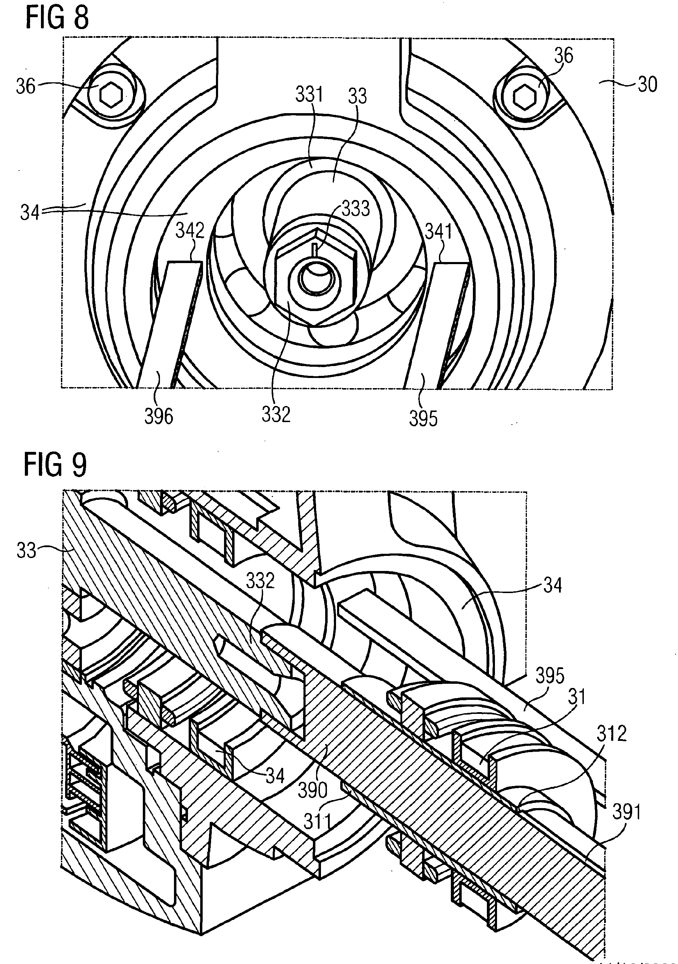

In den FIG 8 bis FIG 11 ist nun der Aufpressvorgang des Resolverrotors 31 auf das Ende einer Welle 33 dargestellt. Der Resolverstator 34 ist in FIG 8 bereits mit Schrauben 36 am Lagerschild 30 der elektrischen Maschine befestigt. An dem Ende der Welle 33 ist eine Schulter 331 zu erkennen, die einen Anschlag für den Resolverrotor 31 darstellt. An der Stirnseite der Welle 33 ist ein Sechskant 332 mit einer Markierung 333 ausgebildet. Diese Markierung 333 kennzeichnet beispielsweise eine "Mitte Nordpol"-Ausrichtung des Rotors der elektrischen Maschine.

In die Statorausnehmungen 341 und 342 sind die Stäbe 395 und 396 des Montagewerkzeugs 39 eingesteckt. Insgesamt ist der Resolverstator 34 im vorliegenden Beispiel so auszurichten, dass die radiale Richtung beispielsweise der Statorausnehmung 341 mit der radialen Richtung der Markierung 333 einen 90°-Winkel einnimmt. Im vorliegenden Beispiel liegen die beiden Statorausnehmungen 341 und 342 in einer horizontalen Ebene, während die Markierung 333 vertikal nach oben weist. In diesem Zustand ist der Resolver in hier gewünschter Weise auf die Welle 33 bzw. den Rotor der elektrischen Maschine ausgerichtet.

FIG 9 zeigt nun einen Querschnitt durch den Teil der elektrischen Maschinen mit dem Resolver, wobei die mittlere Stange 390 des Montagewerkzeugs 39 auf das Ende der Welle 33, d.h. den Sechskant 332 aufgesetzt ist. Der Resolverrotor 31 befindet sich axial verschiebbar auf der ersten Stange 390. Durch die Führung 391 in Zusammenspiel mit seiner Nut 312 ist er gegen Verdrehen gesichert.

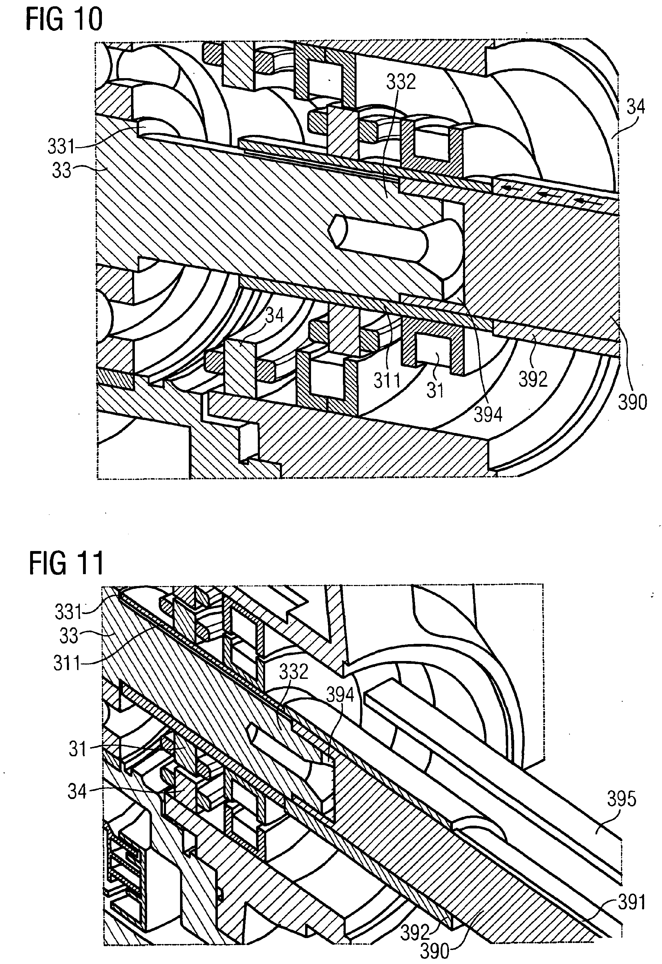

In FIG 10 ist zu erkennen, dass die Presshülse 392 des Montagewerkzeugs 39 den Resolverrotor 31 bzw. dessen Innenhülse 311 von der ersten Stange 390 auf die Welle 33 gemäß den eingezeichneten Pfeilen schiebt.

In FIG 11 ist der Aufpressvorgang beendet. Dies ist daran zu erkennen, dass die Hülse 311 an der Wellenschulter 331 anschlägt und vollständig von der ersten Stange 390 geschoben ist. Das Montagewerkzeug 39 hat mit seinem Innensechskant 394 und seiner Führung 391 bewirkt, dass der Resolverrotor 31 exakt mit der Welle 33 ausgerichtet ist. Die am Montagewerkzeug starr befestigten weiteren Stäbe 395 und 396 bewirken die exakte Ausrichtung des Resolverstators 34 in Drehrichtung relativ zu dem Resolverrotor 31 bzw. der Welle 33. Alle drei Komponenten (Welle 33, Resolverrotor 31 und Resolverstator 34) sind somit exakt zueinander justiert, ohne dass es nach der Montage eines eigenen Justagevorgangs bedarf.

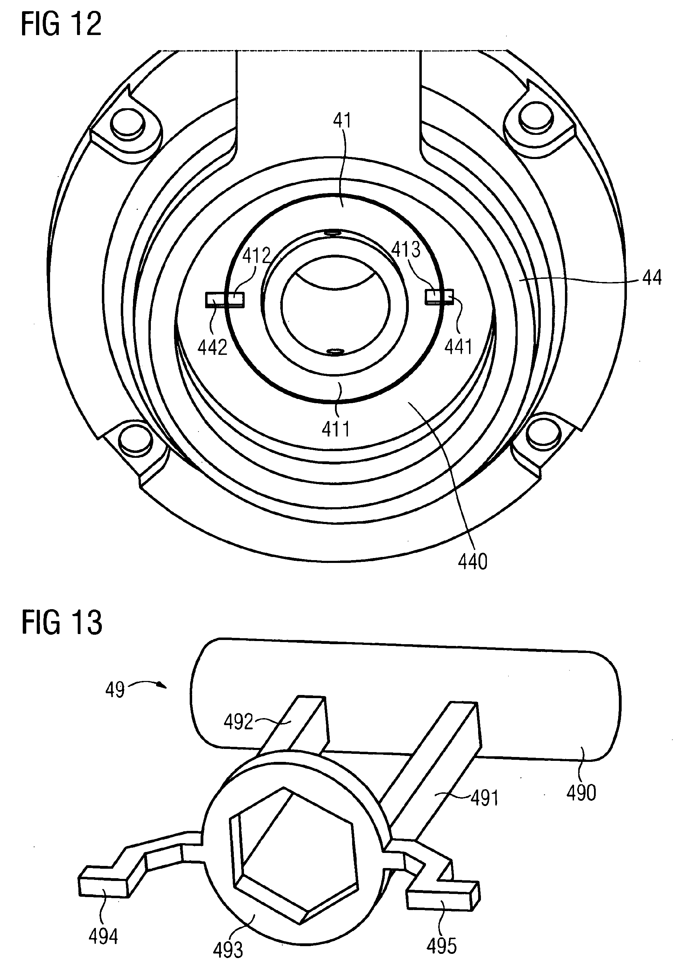

Ein drittes Ausführungsbeispiel wird nun anhand der FIG 12 bis 16 erläutert. FIG 12 zeigt einen Resolver im Anlieferzustand. Er besitzt einen Resolverrotor 41 und einen Resolverstator 44. Eine Stirnseitenfläche 411 des Resolverrotors 41 ist mit einer Stirnseitenfläche 441 des Resolverstators 44 in etwa bündig. In die Stirnseitenfläche 411 sind am Außenrand zwei sich hier diametral gegenüberliegende Rotorausnehmungen 412 und 413 eingearbeitet. Jeder der beiden Ausnehmungen 412 und 413 ist jeweils gegenüberstehend in der Statorstirnfläche 440 eine Statorausnehmung 441 und 442 zugeordnet. Es ist zu erkennen, dass die Statorausnehmung 441 etwas kleiner ist als die Statorausnehmung 442. Der Grund hierfür liegt wieder in der Formcodierung, um eine eindeutige Positionierung des Montagewerkzeugs erreichen zu können. Die Ausnehmungen 412, 413, 441 und 442 erstrecken sich in axialer Richtung in einer gewissen Tiefe.

In FIG 13 ist ein Montagewerkzeug 49 perspektivisch dargestellt, das zum drehgenauen Aufstecken des Resolvers auf einen Wellenstumpf dient. Das Montagewerkzeug 49 besitzt einen Handgriff 490. Daran ist über zwei parallele stabförmige Stege 491 und 492 ein Ring 493 mit einem Innensechskant angeformt. An zwei gegenüberliegenden Seiten des Rings 493 sind Passfüße 494 und 495 ausgebildet. Der rechte Passfuß 495 besitzt hier zum Zwecke der Formcodierung eine etwas größere Fußfläche als der Passfuß 494.

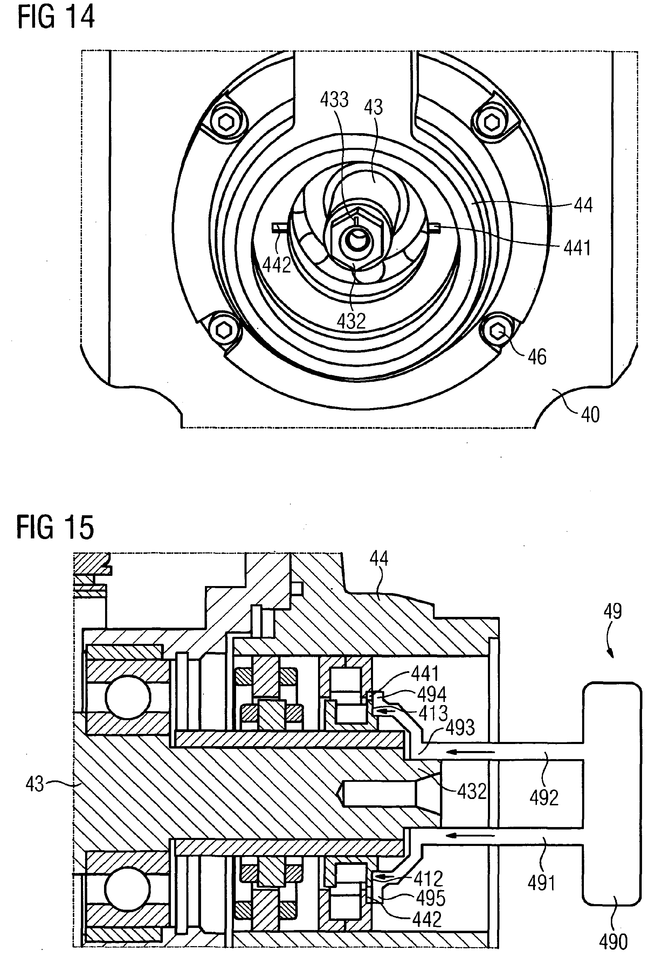

In FIG 14 ist eine schräge Draufsicht auf die Stirnseite einer elektrischen Maschine dargestellt. Der Resolverstator 44 ist mit Schrauben 46 an dem Lagerschild 40 der elektrischen Maschine befestigt. Neben den Statorausnehmungen 442 und 443 ist auch das Ende der Welle 43 mit seinem stirnseitigen Sechskant 432 und der Markierung 433 erkennbar.

FIG 15 zeigt einen Schnitt durch die elektrische Maschine von FIG 14, wobei der Resolverrotor 41 bereits mit Hilfe des Montagewerkzeugs 49 drehgenau fast komplett auf die Welle 43 aufgeschoben wurde. Der Resolverrotor 41 und der Resolverstator 44 stehen sich axial noch nicht exakt gegenüber. Der Ring 493 ist aber bereits mit seinem Innensechskant auf den Sechskant 432 der Welle 43 aufgeschoben, so dass das Werkzeug 49 die gewünschte Drehposition gegenüber der Welle 43 einnimmt. Da auch die Passfüße 494 und 495 in die Rotorausnehmungen 412 und 413 ragen, befindet sich auch der Resolverrotor 41 in der gewünschten Drehposition gegenüber der Welle 43. Mit einem letzten axialen Schub treten die Passfüße 494 und 495 des Montagewerkzeugs 49 auch in die Statorausnehmungen 441 und 442, wodurch auch der Resolverstator 44 gegenüber dem Resolverrotor 41 und der Welle 43 hinsichtlich seiner Drehposition justiert ist.

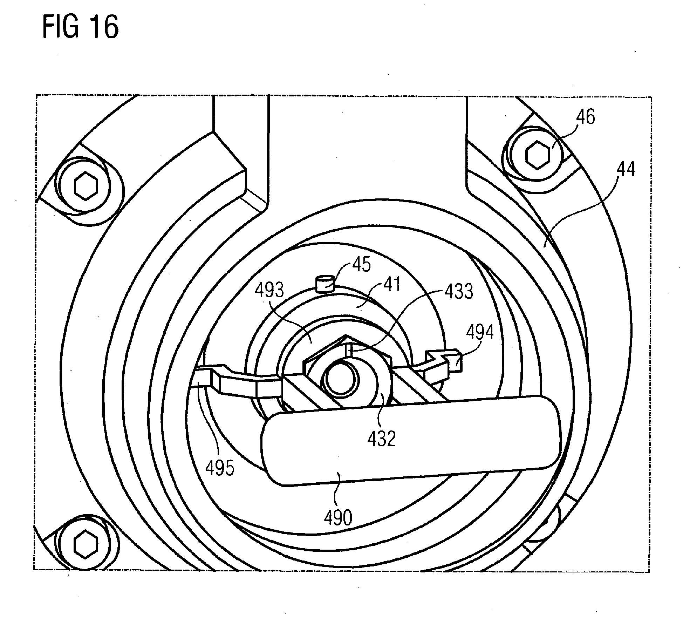

Diese Endmontageposition ist in einer perspektivischen Ansicht in FIG 16 dargestellt. Da in dem vorliegenden Beispiel der Resolverrotor 41 nicht auf die Welle 43 gepresst, sondern nur mit wenig Kraft gesteckt ist, wird er mit Hilfe eines oder mehrerer Gewindestifte 45 auf der Welle 43 befestigt. Dadurch ist der Resolverrotor 41 verdrehsicher und sicher gegen axiale Verschiebung auf der Welle 43 montiert. Nach der Montage wird auch hier das Montagewerkzeug 49 axial vom Resolver bzw. der Welle abgezogen.

In vorteilhafter Weise ist bei den oben genannten Ausführungsformen eine Zusammenführung von Resolver-Umbauteilen möglich, wodurch die Verwendung einer Vorjustage-Vorrichtung bei der Montage möglich wird und somit die Justage in der Endprüfung entfallen kann.

## Patentansprüche

1. Verfahren zum Montieren eines Resolvers, der einen Resolverstator (4,14,24,34,44) und einen Resolverrotor (1,11,21, 31,41) aufweist, an einer Welle (3,13,23,33,43),
**gekennzeichnet durch**
- Bereitstellen des Resolverstators (4,14,24,34,44) mit mindestens einer axial ausgebildeten Statorausnehmung (141,142,341,342,441,442) und
- Bereitstellen des Resolverrotors (1,11,21,31,41) mit mindestens einer axial ausgebildeten Rotorausnehmung (115, 116,312,412,413) und
- Ausrichten der Statorausnehmung (141,142,341,342,441, 442) und der Rotorausnehmung (115,116,312,412,413) in Rotationsrichtung zueinander, indem ein Montagewerkzeug (19,39,49) zum Montieren des Resolvers mit einem jeweiligen Werkzeugabschnitt (191,192,391,395,396,494,495) gleichzeitig in die Statorausnehmung (141,142,341,342,441,442) und die Rotorausnehmung (115,116,312,412,413) axial gesteckt wird.

2. Verfahren nach Anspruch 1, wobei das Montagewerkzeug (19, 39,49) einen Hohlzylinder (190) aufweist, an dessen einer Stirnseite zwei Stifte (191,192) axial abstehen, welche als die Werkzeugabschnitte in die Statorausnehmung (141,142,341, 342,441,442) und die Rotorausnehmung (115,116,312,412, 413) zum Ausrichten eingesteckt werden.

3. Verfahren nach Anspruch 2, wobei durch den Hohlzylinder (190) des Montagewerkzeugs (19,39,49) hindurch eine Schraube (12) oder Mutter zur Befestigung des Resolverrotors (1,11, 21,31,41) in/auf die Welle (3,13,23,33,43) geschraubt wird.

4. Verfahren nach Anspruch 1, wobei das Montagewerkzeug (19, 39,49) ein Presswerkzeug ist, das eine Stange (390) mit einer axial verlaufenden Führung (391) und eine darauf axial geführte Hülse (392) aufweist, und wobei der Resolverrotor (1, 11,21,31,41) beim Aufpressen auf die Welle (3,13,23,33,43) mit seiner Rotorausnehmung (115,116,312,412,413) an der Führung (391) axial geführt wird.

5. Verfahren nach Anspruch 4, wobei die Stange (390) formschlüssig axial auf die Welle (3,13,23,33,43) gesteckt wird.

6. Verfahren nach Anspruch 4 oder 5, wobei das Montagewerkzeug (19,39,49) mindestens eine zu der Stange (390) parallele Ausrichtstange (395,396) aufweist, die beim Ausrichten in die Statorausnehmung (141,142,341,342,441,442) gesteckt wird.

7. Verfahren nach Anspruch 1, wobei das Montagewerkzeug (19, 39,49) einen radial ausgerichteten Werkzeugabschnitt (494, 495) aufweist, die Rotorausnehmung (115,116,312,412,413) und die Statorausnehmung (141,142,341,342,441,442) jeweils stirnseitig am Resolverrotor (1,11,21,31,41) und am Resolverstator (4,14,24,34,44) ausgebildet sind, und der radial gerichtete Werkzeugabschnitt (494,495) zum Ausrichten axial in beide Ausnehmungen gesteckt wird.

8. Verfahren nach Anspruch 7, wobei das Montagewerkzeug (19, 39,49) ein Formschlusselement (394,493) aufweist, mit dem es verdrehsicher auf die Welle (3,13,23,33,43) gesteckt wird.

9. Verfahren nach Anspruch 8, wobei das Formschlusselement (394,493) nur in einer vorgegebenen Drehstellung auf die Welle (3,13,23,33,43) aufsteckbar ist.

10. Verfahren nach einem der vorhergehenden Ansprüche, wobei das Montagewerkzeug (19,39,49) nach dem Befestigen des Resolverrotors (1,11,21,31,41) an der Welle (3,13,23,33,43) und des Resolverstators (4,14,24,34,44) an einem Lagerschild (10, 30,40) oder Gehäuse der elektrischen Maschine axial von dem Resolver abgezogen wird.

11. Elektrische Maschine mit
- einer Welle (3,13,23,33,43) und
- einem Resolver, der einen Resolverstator (4,14,24,34,44) und einen Resolverrotor (1,11,21,31,41) aufweist,
**dadurch gekennzeichnet, dass**
- der Resolverstator (4,14,24,34,44) mindestens eine Statorausnehmung (141,142,341,342,441,442) und der Resolverrotor (1,11,21,31,41) mindestens eine Rotorausnehmung (115, 116,312,412,413) aufweist, und
- die Statorausnehmung (141,142,341,342,441,442) und die Rotorausnehmung (115,116,312,412,413) axial ausgebildet sind, so dass
- ein Montagewerkzeug (19,39,49) zum Montieren des Resolvers an die Welle (3,13,23,33,43) mit einem jeweiligen Werkzeugabschnitt (191,192,391,395,396,494,495) gleichzeitig in die Statorausnehmung (141,142,341,342,441,442) und die Rotorausnehmung (115,116,312,412,413) axial steckbar ist, um die Drehposition beider Resolverkomponenten zueinander genau festzulegen.

12. Elektrische Maschine nach Anspruch 11, wobei das Montagewerkzeug (19,39,49) auf den Resolver aufgesteckt ist und einen Hohlzylinder (190) aufweist, an dessen einer Stirnseite zwei Stifte (191,192) axial abstehen, welche als die Werkzeugabschnitte in die Statorausnehmung (141,142,341,342, 441, 442) und die Rotorausnehmung (115,116,312,412,413) zum Ausrichten eingesteckt sind.

13. Elektrische Maschine nach Anspruch 11, wobei das Montagewerkzeug (19,39,49) auf den Resolver aufgesteckt ist und ein Presswerkzeug darstellt, das eine Stange (390) mit einer axial verlaufenden Führung (391) und eine darauf axial geführte Hülse (392) aufweist, und wobei der Resolverrotor (1,11,21, 31,41) mit seiner Rotorausnehmung (115) in der Führung (391) axial geführt ist.

14. Elektrische Maschine nach Anspruch 11, wobei das Montagewerkzeug (19,39,49) auf den Resolver aufgesteckt ist und einen radial ausgerichteten Werkzeugabschnitt (494,495) aufweist, die Rotorausnehmung (115,116,312,412,413) und die Statorausnehmung (141,142,341,342,441,442) jeweils stirnseitig am Resolverrotor (1,11,21,31,41) und am Resolverstator (4,14, 24,34,44) ausgebildet sind, und der radial gerichtete Werkzeugabschnitt (494,495) axial entnehmbar in beide Ausnehmungen gesteckt ist.

## Claims

1. Method for fitting a resolver comprising a resolver stator (4, 14, 24, 34, 44) and a resolver rotor (1, 11, 21, 31, 41) to a shaft (3, 13, 23, 33, 43),
**characterised by**
- providing the resolver stator (4, 14, 24, 34, 44) with at least one axially embodied stator recess (141, 142, 341, 342, 441, 442) and
- providing the resolver rotor (1, 11, 21, 31, 41) with at least one axially embodied rotor recess (115, 116, 312, 412, 413) and
- aligning the stator recess (141, 142, 341, 342, 441, 442) and the rotor recess (115, 116, 312, 412, 413) relative to one another in the direction of rotation, by an assembly tool (19, 39, 49) for fitting the resolver with a respective tool section (191, 192, 391, 395, 396, 494, 495) being axially inserted into the stator recess (141, 142, 341, 342, 441, 442) and the rotor recess (115, 116, 312, 412, 413) at the same time.

2. Method according to claim 1, wherein the assembly tool (19, 39, 49) comprises a hollow cylinder (190), at a front face of which two pins (191, 192) protrude axially, which, as the tool sections, are introduced into the stator recess (141, 142, 341, 342, 441, 442) and the rotor recess (115, 116, 312, 412, 413) for alignment purposes.

3. Method according to claim 2, wherein a screw (12) or nut for fastening the resolver rotor (1, 11, 21, 31, 41) into/onto the shaft (3, 13, 23, 33, 43) is screwed through the hollow cylinder (190) of the assembly tool (19, 39, 49).

4. Method according to claim 1, wherein the assembly tool (19, 39, 49) is a pressing tool, which has a rod (390) with an axially running guidance (391) and a sleeve (392) guided axially thereupon, and wherein the resolver rotor (1, 11, 21, 31, 41) is axially guided with its rotor recess (115, 116, 312, 412, 413) on the guidance (391) when being pressed onto the shaft (3, 13, 23, 33, 43).

5. Method according to claim 4, wherein the rod (390) is axially inserted in a form-fit manner onto the shaft (3, 13, 23, 33, 43).

6. Method according to claim 4 or 5, wherein the assembly tool (19, 39, 49) comprises at least one alignment rod (395, 396) in parallel with the rod (390), which alignment rod (395, 396) is inserted into the stator recess (141, 142, 341, 342, 441, 442) during the alignment process.

7. Method according to claim 1, wherein the assembly tool (19, 39, 49) comprises a radially aligned tool section (494, 495), the rotor recess (115, 116, 312, 412, 413) and the stator recess (141, 142, 341, 342, 441, 442) are each embodied at the front face on the resolver rotor (1, 11, 21, 31, 41) and on the resolver stator (4, 14, 24, 34, 44) and the radially aligned tool section (494, 495) is axially inserted into both recesses for alignment purposes.

8. Method according to claim 7, wherein the assembly tool (19, 39, 49) comprises a form-fit element (394, 493) with which it is inserted onto the shaft (3, 13, 23, 33, 43) in an anti-twist manner.

9. Method according to claim 8, wherein the form-fit element (394, 493) can only be attached to the shaft (3, 13, 23, 33, 43) in a predetermined rotational position.

10. Method according to one of the preceding claims, wherein after fastening the resolver rotor (1, 11, 21, 31, 41) to the shaft (3, 13, 23, 33, 43) and the resolver stator (4, 14, 24, 34, 44) on a bearing shield (10, 30, 40) or housing of the electrical machine, the assembly tool (19, 39, 49) is axially detached from the resolver.

11. Electrical machine having
- a shaft (3, 13, 23, 33, 43) and
- a resolver comprising a resolver stator (4, 14, 24, 34, 44) and a resolver rotor (1, 11, 21, 31, 41),
**characterised in that**
- the resolver stator (4, 14, 24, 34, 44) comprises at least one stator recess (141, 142, 341, 342, 441, 442) and the resolver rotor (1, 11, 21, 31, 41) comprises at least one rotor recess (115, 116, 312, 412, 413), and
- the stator recess (141, 142, 341, 342, 441, 442) and the rotor recess (115, 116, 312, 412, 413) are embodied axially such that
- an assembly tool (19, 39, 49) for fixing the resolver on the shaft (3, 13, 23, 33, 43) can be axially inserted into the stator recess (141, 142, 341, 342, 441, 442) and the rotor recess (115, 116, 312, 412, 413) at the same time using a respective tool section (191, 192, 391, 395, 396, 494, 495) in order to accurately define the rotational position of both resolver components relative to one another.

12. Electrical machine according to claim 11, wherein the assembly tool (19, 39, 49) is attached to the resolver and comprises a hollow cylinder (190), on a front face of which two pins (191, 192) protrude axially, which, as the tool sections, are introduced into the stator recess (141, 142, 341, 342, 441, 442) and the rotor recess (115, 116, 312, 412, 413) for alignment purposes.

13. Electrical machine according to claim 11, wherein the assembly tool (19, 39, 49) is attached to the resolver and represents a pressing tool comprising a rod (390) with an axially running guidance (391) and a sleeve (392) axially guided thereupon, and wherein the resolver rotor (1, 11, 21, 31, 41) is axially guided in the guidance (391) with its rotor recess (115).

14. Electrical machine according to claim 11, wherein the assembly tool (19, 39, 49) is attached to the resolver and comprises a radially aligned tool section (494, 495), the rotor recess (115, 116, 312, 412, 413) and the stator recess (141, 142, 341, 342, 441, 442) are embodied in each instance at the front face on the resolver rotor (1, 11, 21, 31, 41) and on the resolver stator (4, 14, 24, 34, 44) and the radially aligned tool section (494, 495) is inserted into both recesses so as to be axially removable.

## Revendications

1. Procédé de montage d'un résolveur, qui a un stator ( 4, 14, 24, 34, 44 ) de résolveur et un rotor ( 1, 11, 21, 31, 41 ) de résolveur sur un arbre ( 3, 13, 23, 33, 43 ),
**caractérisé en ce que**
- on se procure le stator ( 4, 14, 24, 34, 44 ) de résolveur ayant au moins un évidement ( 141, 142, 341, 342, 441, 442 ) statorique constitué axialement et
- on se procure le rotor ( 1, 11, 21, 31, 41 ) de résolveur ayant au moins un évidement ( 115, 116, 312, 412, 413 ) rotorique constitué axialement et
- on oriente l'évidement ( 141, 142, 341, 342, 441, 442 ) statorique et l'évidement ( 115, 116, 312, 412, 413 ) rotorique dans le sens de rotation l'un par rapport à l'autre en emmanchant axialement un outil ( 19, 39, 49 ) de montage pour le montage du résolveur, ayant une partie ( 191, 192, 391, 395, 396, 494, 495) d'outil respectif en même temps dans l'évidement ( 141, 142, 341, 342, 441, 442 ) statorique et dans l'évidement ( 115, 116, 312, 412, 413 ) rotorique.

2. Procédé suivant la revendication 1, dans lequel l'outil ( 19, 39, 49 ) de montage comporte un cylindre ( 190 ) creux, à l'un des côtés frontaux duquel font saillie axialement deux broches ( 191, 192 ), qui sont emmanchées pour l'orientation en tant que parties de l'outil dans l'évidement ( 141, 142, 341, 342, 441, 442 ) statorique et dans l'évidement ( 115, 116, 312, 412, 413 ) rotorique.

3. Procédé suivant la revendication 2, dans lequel on visse dans le cylindre ( 190 ) creux de l'outil ( 19, 39, 49 ) de montage une vis ( 12 ) ou un écrou pour la fixation du rotor ( 1, 11, 21, 31, 41 ) de résolveur dans/sur l'arbre ( 3, 13, 23, 33, 43 ).

4. Procédé suivant la revendication 1, dans lequel l'outil ( 19, 39, 49 ) de montage est un outil d'application d'une pression, qui a une barre ( 390 ) ayant un guidage ( 391 ) s'étendant axialement et un manchon ( 392 ) qui y est guidé axialement et le rotor ( 1, 11, 21, 31, 41 ) du résolveur est guidé axialement sur le guidage ( 391 ) lors de l'application avec pression sur l'arbre ( 3, 13, 23, 33, 43 ) par son évidemment ( 115, 116, 312, 413 ) rotorique.

5. Procédé suivant la revendication 4, dans lequel la barre ( 390 ) est emmanchée axialement à complémentarité de forme sur l'arbre ( 3, 13, 23, 33, 43 ).

6. Procédé suivant la revendication 4 ou 5, **caractérisé en ce que** l'outil ( 19, 39, 49 ) de montage comporte au moins, parallèle à la barre ( 390 ), une barre ( 395, 396 ) d'orientation qui, lors de l'orientation, est emmanchée dans l'évidement ( 141, 142, 341, 342, 441, 442 ) statorique.

7. Procédé suivant la revendication 1, dans lequel l'outil ( 19, 39, 49 ) de montage a une partie ( 494, 495 ) d'outil orientée radialement, l'évidement ( 115, 116, 312, 412, 413 ) rotorique et l'évidement ( 141, 142, 341, 342, 441, 442 ) statorique sont formés respectivement du côté frontal sur le rotor ( 1, 11, 21, 31, 41 ) du résolveur et sur le stator ( 4, 14, 24, 34, 44 ) du résolveur et la partie ( 494, 495 ) d'outil dirigée radialement est emmanchée pour l'orientation axialement dans les deux évidements.

8. Procédé suivant la revendication 7, dans lequel l'outil ( 19, 39, 49 ) de montage comporte un élément ( 394, 493 ) à complémentarité de forme, par lequel il est emmanché sans possibilité de torsion sur l'arbre ( 3, 13, 23, 33, 43 ).

9. Procédé suivant la revendication 8, dans lequel l'élément ( 394, 493 ) à complémentarité de forme ne peut être emmanché sur l'arbre ( 3, 13, 23, 33, 43 ) que dans une position en rotation prescrite.

10. Procédé suivant l'une des revendications précédentes, dans lequel l'outil (19, 39, 49) de montage est, après la fixation du rotor ( 1, 11, 21, 31, 41 ) du résolveur sur l'arbre ( 3, 13, 23, 33, 43 ) et du stator ( 4, 14, 24, 34, 44 ) du résolveur sur un flasque ( 10, 30, 40 ) ou un carter de la machine électrique, retiré axialement du résolveur.

11. Machine électrique comprenant
- un arbre ( 3, 13, 23, 33, 43 ) et
- un résolveur, qui a un stator ( 4, 14, 24, 34, 44 ) de résolveur et un rotor ( 1, 11, 21, 31, 41 ) de résolveur,
**caractérisée en ce que**
- le stator ( 4, 14, 24, 34, 44 ) de résolveur a au moins un évidement ( 141, 142, 341, 342, 441, 442 ) statorique et le rotor ( 1, 11, 21, 31, 41 ) de résolveur a au moins un évidement ( 115, 116, 312, 412, 413 ) rotorique, et
- l'évidement ( 141, 142, 341, 342, 441, 442 ) statorique et l'évidement (115, 116, 312, 412, 413) rotorique sont constitués axialement, de manière
- à pouvoir emmancher axialement un outil ( 19, 39, 49 ) de montage, pour le montage du résolveur sur l'arbre ( 3, 13, 23, 33, 43 ) par une partie ( 191, 192, 391, 395, 396, 494, 495 ) d'outil respective en même temps dans l'évidement (141, 142, 341, 342, 441, 442) statorique et dans l'évidement (115, 116, 312, 412, 413) rotorique, pour fixer exactement l'un par rapport à l'autre la position en rotation des éléments du résolveur.

12. Machine électrique suivant la revendication 11, dans laquelle l'outil ( 19, 39, 49 ) de montage est emmanché sur le résolveur et a un cylindre ( 190 ) creux, de l'un des côtés frontaux duquel font saillie axialement deux broches ( 191, 192 ), qui sont, pour l'orientation, emmanchées comme partie d'outil dans l'évidement ( 141, 142, 341, 342, 441, 442 ) statorique et dans l'évidement ( 115, 116, 312, 412, 413 ) rotorique.

13. Machine électrique suivant la revendication 11, dans laquelle l'outil ( 19, 39, 49 ) de montage est emmanché sur le résolveur et constitue un outil de presse, qui a une barre ( 390 ) ayant un guidage ( 391 ) s'étendant axialement et un manchon ( 392 ), qui y est guidé axialement, et le rotor ( 1, 11, 21, 31, 41 ) du résolveur est guidé axialement dans le guidage ( 391 ) par son évidement ( 115 ) rotorique.

14. Machine électrique suivant la revendication 11, dans laquelle l'outil ( 19, 39, 49 ) de montage est emmanché sur le résolveur et a une partie ( 494, 495 ) d'outil dirigée radialement, l'évidement ( 115, 116, 312, 412, 413 ) rotorique et l'évidement (141, 142, 341, 342, 441, 442 ) statorique sont constitués respectivement du côté frontal du rotor ( 1, 11, 21, 31, 41 ) du résolveur et du stator ( 4, 14, 24, 34, 44 ) du résolveur et la partie ( 494, 495 ) d'outil dirigée radialement est emmanchée avec possibilité de retrait axial dans les deux évidements.
